# EUROPÄISCHE PATENTANMELDUNG

(11) **EP 1 892 566 A1**
(43) Veröffentlichungstag der Anmeldung: **27.02.2008**
(21) Anmeldenummer: 07114622.9
(22) Anmeldetag: 20.08.2007
(51) Int. Cl.: G02F 1/153, C09K 9/00

(54) **Elektrochrom aktive Formulierung und daraus hergestellte elektrochrome Vorrichtung**

(30) Priorität: 22.08.2006 DE 102006039324
(71) Anmelder: SIEMENS AKTIENGESELLSCHAFT, 80333 München (DE)
(72) Erfinder: Kanitz, Andreas, 91315, Höchstadt (DE); Roth, Wolfgang, 91080, Uttenreuth (DE)

(57) **Zusammenfassung**

Die Erfindung betrifft eine elektrochrom aktive Formulierung und eine daraus hergestellte elektrochrome Vorrichtung, wobei die Vorrichtung beispielsweise ein Display, ein Fenster oder ein Spiegel sein kann und vielfarbig ist.
Die erfindungsgemäße elektrochom aktive Formulierung umfaßt einen ersten und einen zweiten Farbstoff, sowie ein Weißpigment wobei der erste Farbstoff ein im elektrischen Feld schaltbares Redoxsystem ist und der zweite Farbstoff die Eigenfarbe des Weißpigmentes beeinflußt.

## Beschreibung

Die Erfindung betrifft eine elektrochrom aktive Formulierung und eine daraus hergestellte elektrochrome Vorrichtung, wobei die Vorrichtung beispielsweise ein Display, ein Fenster oder ein Spiegel sein kann und vielfarbig ist.

Bekannt sind elektrochrome Formulierungen und daraus hergestellte Vorrichtungen beispielsweise aus der WO 02/075442 und der WO 02/075441. Dort werden pH-aktive Farbstoffe in eine Matrix gegeben, die als essentielle Bestandteile ein Polymer als Festelektrolyt, ein Leitsalz, ein Redox-System, TiO₂ als Weißpigment und ein Lösungsmittel enthält.

Ein weiteres Prinzip elektrochrome Displays zu verwirklichen ist aus der DE 10 2005 032 316.2 bekannt und besteht darin, die Farbänderung nicht durch die Änderung des pH-Wertes im Display herbeizuführen, sondern die ohnehin stattfindenden Redoxprozesse zu nutzen, um kontrastreiche Farbwechsel durch die Bildung reduktiver und/oder oxidativer Zustände in geeigneten Materialien zu erzeugen. Dabei sind vor allem die so genannten Viologene und Polythiophene als Materialklassen bekannt geworden.

Nachteilig an den bekannten Systemen ist jedoch, dass sie grundsätzlich nur zwischen transparent und farbig geschaltet werden können, wobei im Status "transparent" in der Regel der Farbeindruck des Weißpigments dominiert, dass dann dem System die weiße Farbe gibt. Durch Anwesenheit eines Farbstoffs wird der Weißeindruck durch die entsprechende Farbe des Farbstoffs überdeckt.

Aufgabe der vorliegenden Erfindung ist es daher, elektrochrome Formulierungen zu schaffen, die zwischen zwei Farbeindrücken, wobei die Farbe weiß ein Farbeindruck sein kann, aber nicht sein muss, reversibel schaltbar ist.

Gegenstand der vorliegenden Erfindung ist eine elektrochrom aktive Formulierung, die einen ersten und einen zweiten Farbstoff umfasst, wobei der erste Farbstoff ein im elektrischen Feld schaltbares Redox-Farbsystem ist und der zweite Farbstoff die Eigenfarbe des Weißpigments beeinflusst. Außerdem ist Gegenstand der Erfindung die Verwendung der Formulierung in einer elektrochromen Vorrichtung, die ein Display, ein Fenster und/oder ein Spiegel sein kann.

Hier werden beispielsweise die Eigenschaften der beiden bisher bekannten grundsätzlichen Prinzipien zum Aufbau e-lektrochromer Formulierungen verbunden indem die eine Farbänderung der elektrochrom aktiven Formulierung durch den Wechsel reduktiver/oxidativer Zustände in der Formulierung entsteht, wobei die andere Farbänderung nach einer Ausführungsform der Erfindung durch eine Änderung im pH-Wert der Formulierung hervorgerufen wird.

Das Redox-Farbsystem umfasst beispielsweise eine Verbindung aus den Materialklassen der Viologene und/oder der Polythiophene.

Nach einer vorteilhaften Ausführungsform umfasst das Redox-Farbsystem ein polymeres 4,4'-Bipyridinium-Derivat, wie es aus der DE 10 2005 032 316.2 bekannt ist, deren Inhalt hiermit auch zur Offenbarung der vorliegenden Beschreibung gemacht werden soll.

Der Farbstoff der die Eigenfarbe des Weißpigments beeinflusst, ist in der Regel vom Wechsel der Redox-Zustände in der Formulierung unbeeinflusst. Diese Farbstoffe sind für sich im elektrischen Feld unter den Bedingungen des Betriebs einer elektrochromen Zelle nicht aktiv im Sinne eines Farbwechsels.

Grundsätzlich sind dazu alle Farbstoffe geeignet, die durch das Redoxsystem nicht zu einer Farbänderung stimuliert werden. Als Beispiele sollen Triarylmethanfarbstoffe und Cumarinfarbstoffe genannt werden. Die Auswahl und Eignung des Farbstoffs wird also durch die jeweiligen Bedingungen wie z. B. Löslichkeit, chemische Beständigkeit und Beständigkeit im elektrischen Feld bestimmt.

Geeignete Farbstoffe müssen nicht aber können durchaus auch pH-Farbstoffe sein. Diese sind für elektrochrome Anwendungen bekannt (WO 02/075442 WO 02/075441A2 A1) und können reversibel zwischen verschiedenen Farbzuständen geschaltet werden. Notwendige Vorraussetzung ist allerdings das Vorhandensein eines redox-aktiven Hydrochinon/Chinon-Systems. Ohne dieses System ist der pH-Farbstoff im elektrischen Feld nicht aktiv. Gerade diese Eigenschaft wird aber in der vorliegenden Erfindungsmeldung genutzt. Der pH-Farbstoff dient dazu, der Matrix eine entsprechende, durch den Farbstoff vorgegebene Eigenfarbe zu geben. Der Farbstoff dient gewissermaßen der Einfärbung des Weißpigments.

Typische Beispiele für die Klasse der pH-schaltbaren Farbstoffe sind beispielsweise: Bromkresol, Phenolrot, Ethylrot, Quinaldinrot, Thymolphtalein, Thymolblau, Malachitgrün, Kristallviolett, Methylviolett 2B, Xylenolblau, Kresolrot, Phyloxine B, Kongorot, methylorange, Bromochlorophenolblau, Alizarinrot, Chlorophenolrot, 4-Nitrophenol, Nilblau A, Anilinblau, Indigo Karmin, Bromothymolblau etc.

Die Schaltzustände einer elektrochromen Vorrichtung wie eines Displays entsprechen damit der durch den Farbstoff gegebenen Eigenfarbe der Matrix und im geschalteten Zustand der spektralen Mischung aus Matrix-Eigenfarbe und der Farbe des elektrochrom aktiven Farbstoffs. Beispielhaft soll eine gelbe Matrix Eigenfarbe gemischt mit einem blauen EC-Farbstoff genannt werden, was also ein gelb-grün schaltendes EC-Device bildet.

Durch die Auswahl des Farbstoffs ist im ungeschalteten Zustand der elektrochrom aktiven Zelle eine große Anzahl von Farbeindrücken möglich. Dies gilt auch für die Farbeindrücke des geschalteten Zustands. Dadurch ist eine nahezu beliebige Darstellung von Farbeindrücken darstellbar. Farbintensitäten sind zudem leicht durch Variation der Farbstoffkonzentrationen möglich.

Eine weitere Möglichkeit zur Erzeugung einer farbigen Grundmatrix besteht darin, farbige Metallkomplexe zu verwenden. Diese werden aus einer komplexbildenden Gruppe und einem für dieses spezifische Metallkation gebildet. Entsprechende Systeme sind mit großer Farbvielfalt z. B. aus der analytischen Chemie zum Nachweis von Kationen bekannt. Ein stellvertretendes Beispiel ist der Komplex des Nickels mit Diacetyldioxim (rot).

### Ausführungsbeispiele

### 1 Herstellung eines Zweifarben-Displays mit einem Xanthen-Farbstoff (Eosin)

6g TiO₂ werden mit 0.15g Eosin (2', 4', 5', 7'- Tetrabromofluorescein Dinatriumsalz) und 2.9 g Diethylengklykol mittels eines Speed-Mixers intensiv miteinander vermischt. Es wird eine rote Paste erhalten. Zu dieser werden 0.6 g eines polymeren 4,4'-Bipyridinium-Derivats (Poly-(dodecyl-4, 4'-bipyridinium-dibromid) ebenfalls mittels eines Speed-Mixers intensiv eingemischt. Aus dieser wird mittels der Rakel-Technik auf einer ITO-beschichteten Folie eine Schicht der Dicke 50 µm hergestellt. Beim Anlegen von 1-2V erfolgt an der Kathode ein blau-violetter Farbeindruck. Durch Umpolen der elektrochromen Zelle kann zwischen den Farbeindrücken rot und blau/violett reversibel hin- und hergeschaltet werden.

### 2 Herstellung eines Zweifarben-Displays mit einem Cumarin-Farbstoff

6g TiO₂ werden mit 0.3g 3-Acetyl-7-diethylamino-cumarin und 2.2 g Diethylengklykol mittels eines Speed-Mixers intensiv miteinander vermischt. Es wird eine gelbe Paste erhalten. Zu dieser werden 0.6 g eines polymeren 4,4'-Bipyridinium-Derivats (Poly-(dodecyl-4,4'-bipyridinium-dibromid) ebenfalls mittels eines Speed-Mixers intensiv eingemischt. Aus dieser wird mittels der Rakel-Technik auf einer ITO-beschichteten Folie eine Schicht der Dicke 50 µm hergestellt. Beim Anlegen von 1-2V erfolgt an der Kathode ein grüner Farbeindruck. Durch Umpolen der elektrochromen Zelle kann zwischen den Farbeindrücken gelb und grün reversibel hin- und hergeschaltet werden.

## Patentansprüche

1. Elektrochrom aktive Formulierung, die einen ersten und einen zweiten Farbstoff umfasst, wobei der erste Farbstoff ein im elektrischen Feld schaltbares Redox-Farbsystem ist und der zweite Farbstoff die Eigenfarbe des Weißpigments beeinflusst.

2. Formulierung nach Anspruch 1, wobei der erste Farbstoff ein 4,4'-Bipyridinium-Derivat umfasst.

3. Formulierung nach einem der Ansprüche 1 oder 2, wobei der erste Farbstoff ein Viologen und/oder ein Polythiophen umfasst.

4. Formulierung nach einem der vorstehenden Ansprüche, wobei der zweite Farbstoff ein pH-aktiver Farbstoff ist.

5. Formulierung nach einem der vorstehenden Ansprüche, wobei der zweite Farbstoff ein nicht pH-aktiver Farbstoff ist.

6. Formulierung nach einem der vorstehenden Ansprüche, wobei der zweite Farbstoff einen Metallkomplex umfasst.

7. Verwendung der Formulierung in einer elektrochromen Vorrichtung, die ein Display, ein Fenster und/oder ein Spiegel sein kann.
